# EUROPEAN PATENT SPECIFICATION

(11) **EP 1 840 411 B1**
(45) Date of publication and mention of the grant of the patent: **07.07.2010**
(21) Application number: 07006368.0
(22) Date of filing: 28.03.2007
(51) Int. Cl.: F16H 55/36, F16H 55/48

(54) **Pulley assembly**
Scheibenanordnung
Ensemble de poulie

(30) Priority: 29.03.2006 JP 2006091388; 29.03.2006 JP 2006091395
(43) Date of publication of application: 03.10.2007
(73) Proprietor: JTEKT Corporation, Osaka-shi Osaka 542-8502 (JP)
(72) Inventor: Ueno, Hiroshi, Osaka-shi Osaka 542-8502 (JP); Yanai, Kunio, Osaka-shi Osaka 542-8502 (JP)
(74) Representative: HOFFMANN EITLE

(56) References cited:
- WO-A-98/34053
- JP-A- 2005 264 989
- JP-A- 2006 070 972
- US-A1- 2005 005 448

## Description

### BACKGROUND OF THE INVENTION

The present invention relates to a pulley assembly. In particular, the invention relates to a pulley assembly suitable for use in tensioners or idlers for timing belts of automobile engines, and the like.

Among conventional pulley assemblies to be used in tensioners or idlers for timing belts of automobile engines or the like is one in which with a view to reduction in weight and cost, a resin-made pulley is integrally molded around an outer circumferential surface of a metallic outer ring of a bearing (see JP 2001-200917 A ).

However, this conventional pulley assembly has a problem that because of a difference in coefficient of thermal expansion between the material of the outer ring and the material of the pulley, creeps may occur between the outer ring of the bearing and the pulley due to a difference in thermal expansion resulting from temperature increases.

Besides, because of poor heat radiation of the resin-made pulley, heat such as heat generated in the bearing and frictional heat generated between the resin-made pulley and the belt is not radiated enough but accumulated within the resin-made pulley, causing the bearing temperature to increase. Another problem in conjunction with this is that the temperature increase of the bearing makes grease within the bearing more likely to deteriorate, causing the bearing to be shortened in life time. There is a further problem that because of poor recyclability of the resin-made pulley, use of resin-made pulleys is undesirable from the viewpoints of effective utilization of resources and environmental preservation.

WO 98/34053 A discloses a combination of features falling within the scope of the preamble of Claim 1. Relevant prior art is also disclosed in JP 2005-264989 A and JP 2006-070972 A.

### SUMMARY OF THE INVENTION

According to the present invention, there is provided a pulley assembly, comprising: a bearing having an outer ring, an inner ring, and rolling elements; a light metal pulley placed around the outer ring of the bearing, wherein the pulley comprises: a light metal annular boss; a light metal annular rim placed concentrically with the annular boss; and a plurality of light metal platy spokes which extend radially from the boss toward the rim and connect the boss and the rim to each other; and the pulley assembly further comprising: an annular joint member provided between an inner circumferential surface of the pulley and an outer circumferential surface of the outer ring for joining the pulley to the bearing, said annular joint member being made of a high polymer material, wherein the pulley, the outer ring of the bearing, and the joint member have different coefficients of thermal expansion, wherein the coefficient of thermal expansion of the pulley is larger than the coefficient of thermal expansion of the outer ring, and the coefficient of thermal expansion of the joint member is larger than the coefficient of thermal expansion of the pulley; characterized in that: said spokes of the pulley each have side faces which each consist of a surface extending parallel to an axis of the pulley, wherein each of said spokes further has a front face and a rear face that are axially opposite end faces, and the front faces of the spokes are positioned on one identical imaginary surface of revolution centered on the axis of the pulley, and the rear faces of the spokes are also positioned on one identical imaginary surface of revolution centered on the axis of the pulley.

An advantage achievable with embodiments of the present invention is to provide a pulley assembly which is less subject to occurrence of creeps between the outer ring of the bearing and the pulley, suppressing deterioration of grease within the bearing, and which is easy to recycle, as well as to provide a pulley which is suitable for use in such a pulley assembly and which is good at heat radiation, strong and lightweight, recyclable, and less liable to generate wind noise.

In the present invention, the joint member having a coefficient of thermal expansion larger than that of the pulley is interposed between the pulley and the bearing. Therefore, even if the pulley assembly has increased in temperature so that the pulley thermally expands in such a direction as to separate away from the bearing, the joint member, which is larger in thermal expansion than the pulley, expands so as to compress the bearing, so that the outer ring is bound to the pulley. Thus, occurrence of creeps between the outer ring of the bearing and the pulley can be suppressed.

Also, since the pulley is made of a light metal, the pulley assembly can be improved in heat radiation as compared with resin-made pulleys, so that heat generated in the bearing or frictional heat generated between the light-metallic pulley and the belt can be radiated outside enough. Therefore, increases in the bearing temperature can be suppressed and deteriorations of grease within the bearing can be retarded, allowing the bearing to be prolonged in life time. Since the grease does not easily deteriorate, use of expensive lubricating oil such as heat-resistant high-performance greases can be avoided, so that the cost for the pulley assembly can be reduced.

Furthermore, according to the present invention, the pulley, which is made of a light metal, can be enhanced in strength in comparison with conventional resin-made pulleys. Thus, the pulley can be made smaller in thickness in its individual portions and therefore the pulley assembly can be made lightweight.

Furthermore, since the pulley is made of a light metal, the pulley can be recycled so that the ratio of recyclable parts of the assembly as a whole can be increased. Thus, reusability of resources can be improved, which contributes to environmental preservation.

The present inventors have verified that if side faces of the platy spokes are parallel to the axial direction of the pulley, there occurs little or no unusual noise such as wind noise during operation of the pulley. It was also verified that if platy side faces of the pulley are inclined with respect to the axial direction, air noise or wind noise is more easily generated with rotation of the pulley.

Thus, according to the invention, since the side faces of the platy spokes are parallel to the axial direction, wind noise is prevented from occurring. A reason of this can be considered as follows: because the side faces of the platy spokes are parallel to the axial direction, the pulley, even while rotating, does not exert a pump action, but rotates in an air-holding state.

Also, in the present invention, since the pulley is made of a light metal material, the pulley can be enhanced in strength, as compared with conventional resin-made pulleys. Since the spokes are platy members having surfaces extending parallel to the axial direction, the rim can be firmly supported against the boss, so that the pulley becomes strong against axial external forces. Since the pulley can be enhanced in strength, the pulley can be made smaller in thickness in its individual portions as compared with conventional resin-made pulleys. Moreover, spaces running through the pulley in the axial direction may be defined between the rim, the boss, and circumferentially adjacent two spokes. Thus, the pulley can be made lightweight.

Also, due to use of a light metal as the material of the pulley and the presence of spaces running through in the axial direction, the pulley can be greatly improved in heat radiation, as compared with conventional resin-made pulleys. Therefore, for example, when the pulley is mounted around a rolling bearing, heat generated in the rolling bearing or frictional heat generated between the pulley and the belt can be radiated enough into the outside space. Thus, the temperature increase of the rolling bearing can be suppressed, so that deteriorations of grease within the bearing can be suppressed, allowing the bearing to be prolonged in life time. Besides, since the grease less easily deteriorates, use of expensive lubricating oil such as heat-resistant high-performance greases can be avoided, so that the cost for a pulley assembly having the pulley of this aspect of the invention and a rolling bearing can be reduced.

With an assembly comprising such a pulley, since side faces of the spokes extend parallel to the axial direction, the pulley can be molded by extrusion, and therefore the pulley can be mass produced at low cost.

In this case also, since the pulley is made of a highly reusable light metal material, wasteful use of resources can be reduced and a contribution to environmental preservation can be achieved.

As noted, each of said spokes further has a front face and a rear face that are axially opposite end faces, and the front faces of the plurality of spokes are positioned on one identical imaginary surface of revolution centered on the axis of the pulley, and rear faces of the spokes are also positioned on one identical imaginary surface of revolution centered on the axis of the pulley.

Since front/rear faces of the plurality of spokes are positioned on one identical imaginary surface of revolution centered on the axis of the pulley, an air flow that is moved radially outward by centrifugal force can be rectified by the spokes. Therefore, generation of wind noise can be further reduced.

### BRIEF DESCRIPTION OF THE DRAWINGS

The present invention will become more fully understood from the detailed description given hereinbelow with reference to the accompanying drawings, which are given by way of illustration only, and thus are not intended to limit the present invention, and in which:
Fig. 1 is a front view of a pulley assembly according to a first embodiment of the present invention; and
Fig. 2 is a sectional view taken along the line II - II of Fig. 1.

### DETAILED DESCRIPTION OF THE INVENTION

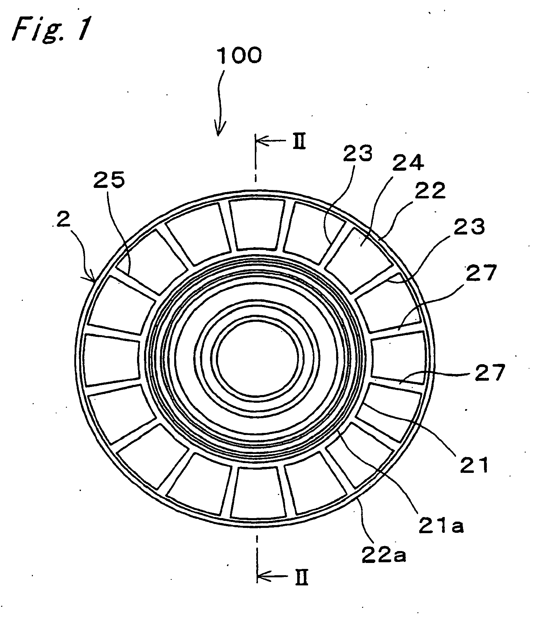

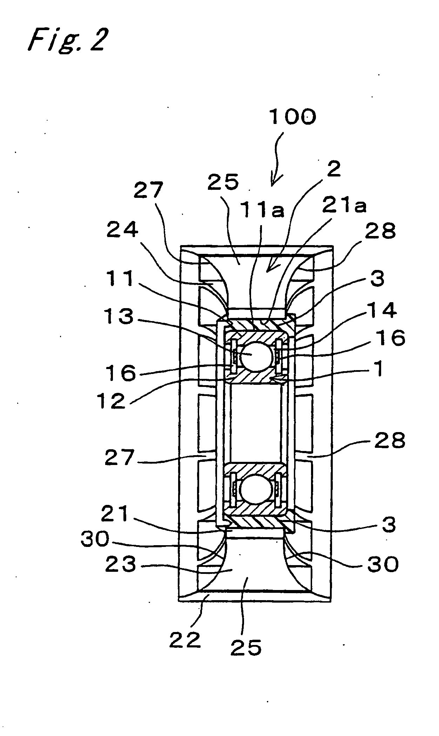

Fig. 1 is a front view of a pulley assembly 100 according to a first embodiment of the present invention. Fig. 2 is a sectional view taken along the line II - II of Fig. 1.

As shown in Fig. 2, the pulley assembly 100 includes a ball bearing 1 as an example of a bearing, a light metal pulley 2, and a joint member 3 placed between the ball bearing 1 and the pulley 2.

The ball bearing 1 has an outer ring 11, an inner ring 12 to be mounted around a shaft not shown in the drawings, and balls 13 placed between the outer ring 11 and the inner ring 12. The outer ring 11, the inner ring 12 and the balls 13 are formed from steel material such as high-carbon chromium bearing steel (SUJ2) or the like. The balls 13 are placed between a raceway groove of the outer ring 11 and a raceway groove of the inner ring 12 circumferentially at specified intervals while being held by an unshown cage. An annular space 14 defined between the outer ring 11 and the inner ring 12 is hermetically closed by seal members 16, 16 provided at both axial ends of the annular space, with grease enclosed inside the space. The seal members 16, 16 are shown schematically for the sake of simplicity of the drawing. The seal members 16, 16 slide on the inner ring 12.

The pulley 2 is formed from a light metal such as aluminum, an aluminum alloy, magnesium, a magnesium alloy, etc. Coefficients of thermal expansion of these materials are larger than that of the steel material from which the outer ring 11 is formed, and smaller than that of a high polymer material from which the joint member 3 is formed. Thus, in this embodiment, the pulley 2, which is made of a light metal, can be improved in heat radiation, as compared with conventional resin-made pulleys. Therefore, in comparison with resin-made pulleys, the grease of the ball bearing 1 and a belt (not shown) stretched over the outer circumferential surface of the pulley 2 can be kept at low temperature, and the grease of the ball bearing 1 and the belt can be prolonged in life time. Also, since the grease less easily deteriorates, use of expensive lubricating oil such as heat-resistant high-performance greases can be avoided, so that the cost for the pulley assembly 100 can be reduced.

Further, the pulley 2, which is made of a light metal, can be enhanced in strength. Thus, in comparison with conventional resin-made pulleys, the pulley 2 can be made smaller in thickness in its individual portions and therefore lighter in weight.

As shown in Fig. 1, the pulley 2 has an annular boss 21, an annular rim 22 provided around and concentrically with the boss 21 at a specified distance in a radial direction from an outer periphery of the boss 21, and a plurality of platy spokes 23 which are arranged at specified intervals in the circumferential direction of the boss 21 and radiate from the boss 21 toward the rim 22 in the radial direction of the boss 21. The boss 21, the rim 22 and the plurality of spokes 23 are integrally molded by extrusion molding. Inner and outer circumferences of the boss 21 as well as inner and outer circumferences of the rim 22 are parallel to an outer circumferential surface of the shaft, and moreover side faces 25 of the platy spokes 23 each consist of a plane that extends parallel to an axis (central axis) of the pulley assembly 100. Accordingly, the pulley 2 can be manufactured by extrusion molding.

As shown in Fig. 1, a space 24 surrounded by the boss 21, the rim 22 and two spokes 23, 23 axially runs through the pulley. Formation of the spaces 24 axially running through the pulley 2 allows the pulley 2 to be reduced in weight and reduced in its manufacturing cost. A belt (not shown) is to be stretched over the outer circumferential surface 22a of the rim 22. In addition to the good heat radiation or dissipation attributable to the material of the pulley 2, which is a light metal, by virtue of the formation of the spaces 24 that run through the pulley in the axial direction, air is allowed to pass through the pulley in the axial direction. Thus, the pulley 2 can be cooled with high efficiency. This makes it possible to keep the pulley 2 low in temperature, so that the belt in contact with the pulley 2 is prevented from easy deterioration so that its life time can be prolonged.

As shown in Fig. 2, an axial width of the boss 21 is generally equal to an axial width of the outer ring 11, while an axial width of the rim 22 is larger than the axial width of the boss 21 positioned radially inward of the rim 22. As shown in Figs. 1 and 2, a side face 25 of each spoke 23 that faces another spoke 23 adjacent to the spoke 23 is formed parallel to the axial direction of the pulley. As shown in Fig. 2, axially opposite edges 30 (front and rear edges) of that side face 25 have a parabolic shape in left-and-right symmetry with respect to a vertical bisector plane of the axis of the pulley 2, thus the side face 25 being generally ginkgo leaf-shaped.

Meanwhile, a front face 27 of the spoke 23 (one of faces of the spoke 23 that connect the two side faces 25 of the spoke 23 to each other) and a rear face 28 (the other of the faces of the spoke 23 that connect the two side faces 25 of the spoke 23 to each other) are each formed into a narrow-width elongate surface stretching from the rim 22 to the boss 21. That is, the spoke 23 is a ginkgo leaf-shaped platy member. Also, as shown in Fig. 2, the front faces 27 of the plurality of spokes 23 are positioned on one identical imaginary surface of revolution centered on the axis of the pulley assembly, and the rear faces 28 of the spokes 23 are also positioned on one identical imaginary surface of revolution centered on the axis, the front faces and the rear faces being arrayed circumferentially without depressions or projections among those front faces or among those rear faces. The platy spokes 23 firmly support the boss 21 and the rim 22 and are formed strong against any axial external force.

In this embodiment, the axially opposite edges of each side face 25 of the spokes 23 are formed in a generally parabolic shape. However, in this invention, those edges of each side face 25 of the spokes 23 may be formed in any other shape that makes the side face 25 have an increasing axial width toward radially outside, such as, for example, a curved shape consisting of a part of an ellipse, a linear shape, or a hyperbolic shape. Alternatively, the axially opposite edges of each side face 25 of the spokes 23 may be formed into a linear shape parallel to a plane vertical to the axis of the pulley assembly such that the side face 25 has a constant axial width.

It has been ascertained that the pulley 2 generates no or little wind noise during operation. One reason for this, although not exactly known, could be that the side faces 25 of the platy spokes 23, which each consist of a surface parallel to the axial direction of the pulley, do not exert a pump action while the pulley is rotating, so that the pulley rotates in an air-holding state between the side faces. Also, the front faces 27 of the plurality of spokes 23 are positioned on one identical imaginary surface of revolution centered on the axis of the pulley assembly and the rear faces 28 of the spokes 23 are also positioned on one identical imaginary surface of revolution centered on the axis, that is, the spokes 23 are arrayed circumferentially without any spoke axially receding or projecting from the other spokes. Therefore, an air flow that is moved radially outward by centrifugal force can be rectified or straightened by the spokes 23. This may be another reason. Conversely, it could be considered that if the platy side faces of the pulley are inclined with respect to the axial direction, air noise or wind noise is more easily generated with rotation of the pulley.

The pulley 2 is manufactured by a method including extrusion molding of a light metal material at a high-temperature state. First, a bar-like body in which the boss 21, the rim 22 and the spokes 23 are integrated together and which has a cross-sectional configuration corresponding to the front view of Fig. 1, is formed by extrusion molding, and this body is cut into pieces having the axial width of the rim 22 of the pulley 2. Then, the front face and rear face of each piece are properly cut to form the boss 21, rim 22 and spokes 23 in one piece. In this way, a pulley in which the boss 21, the rim 22 and the spokes 23 are integrated together is produced. Since the pulley 2 has the side faces 25 of the spokes 23 each formed of a plane parallel to the axial direction as shown above, the pulley 2 can be molded by extrusion. As a consequence, mass production of the pulley 2 becomes practicable, so that the manufacturing cost for the pulley 2 can be reduced.

The joint member 3 has an annular shape. As shown in Fig. 2, the joint member 3 is interposed between the outer ring 11 and the boss 21. The joint member 3 is provided between an outer circumferential surface 11a of the outer ring 11 and an inner circumferential surface 21a of the boss 21. The inner circumferential surface of the joint member 3 covers the entirety of the outer circumferential surface 11a of the outer ring 11, while the outer circumferential surface of the joint member 3 receives the entirety of the inner circumferential surface 21a of the boss 21. The joint member 3 is made of a high polymer material, such as, for example, rubber, nylon or other plastics, elastomers, etc. with glass fiber as reinforcement included in the material as necessary. The coefficient of thermal expansion of the material of the joint member 3 is larger than that of the material of the outer ring 11 and larger than that of the material of the pulley 2, i.e., that of the light metal.

As shown above, the joint member 3 having a coefficient of thermal expansion larger than that of the pulley 2 is interposed between the pulley 2 and the outer ring 11. Therefore, even if the pulley assembly has increased in temperature so that the pulley 2 thermally expands in such a direction as to separate away from the ball bearing 1, the joint member 3, which is larger in degree of thermal expansion than the pulley 2, expands so as to compress the ball bearing 1, so that the outer ring 11 is held against, that is, bound to the pulley 2. Thus, the outer ring 11 and the boss 21 are not disengaged from each other, so that creeps are prevented from occurring between the outer ring 11 of the ball bearing 1 and the pulley 2.

The ball bearing 1, the pulley 2 and the joint member 3 are assembled by, for example, a method described below. First, the ball bearing 1 and the pulley 2 are placed so as to be in one plane. Next, the joint member 3, which is made of a high polymer material and flexible, is compressedly thrust to between the outer circumferential surface 11a of the outer ring 11 of the ball bearing 1 and the inner circumferential surface 21a of the boss 21 of the pulley 2 until opposite axial end portions of the joint member 3 engage with axially opposite end faces of the outer ring 11 and of the boss 21, by which the ball bearing 1, the pulley 2 and the joint member 3 are integrated into a pulley assembly. Use of this method, which makes use of the flexibility of the material of the joint member 3, allows a reliable joint to be achieved without using any adhesive. Although a method in which the molded joint member 3 is compressedly thrust is shown above, it is needless to say that the ball bearing 1, the pulley 2 and the joint member 3 may be integrated together by making the joint member 3 out of a high polymer material injected to between the pulley 2 and the outer ring 11 by an injection molding method. Although the pulley assembly 100 of this embodiment has the ball bearing 1 as shown above, the pulley assembly of the invention may, also needless to say, have a roller bearing or other rolling bearing other than ball bearings.

Embodiments of the invention being thus described, it will be obvious that the same may be varied in many ways. The scope of the invention is defined by the appended claims.

## Claims

1. A pulley assembly, comprising:
a bearing (1) having an outer ring (11), an inner ring (12), and rolling elements (13);
a light metal pulley (2) placed around the outer ring of the bearing, wherein the pulley comprises:
a light metal annular boss (21);
a light metal annular rim (22) placed concentrically with the annular boss; and
a plurality of light metal platy spokes (23) which extend radially from the boss toward the rim and connect the boss and the rim to each other; and the pulley assembly further comprising:
an annular joint member (3) provided between an inner circumferential surface of the pulley and an outer circumferential surface of the outer ring for joining the pulley to the bearing, said annular joint member being made of a high polymer material, wherein
the pulley, the outer ring of the bearing, and the joint member have different coefficients of thermal expansion, wherein
the coefficient of thermal expansion of the pulley is larger than the coefficient of thermal expansion of the outer ring, and the coefficient of thermal expansion of the joint member is larger than the coefficient of thermal expansion of the pulley; **characterized in that**:
said spokes of the pulley each have side faces (25) which each consist of a surface extending parallel to an axis of the pulley, wherein
each of said spokes (23) further has a front face (27) and a rear face (28) that are axially opposite end faces, and
the front faces (27) of the spokes are positioned on one identical imaginary surface of revolution centered on the axis of the pulley, and the rear faces (28) of the spokes are also positioned on one identical imaginary surface of revolution centered on the axis of the pulley.

2. The pulley assembly as claimed in Claim 1, wherein
the pulley (2) is made of at least one material selected from a group consisting of aluminum, aluminum alloy, magnesium and magnesium alloy.

3. The pulley assembly as claimed in Claim 1 or 2, wherein
the joint member (3) is press fitted between the bearing and the pulley.

4. The pulley assembly as claimed in Claim 1, wherein
the pulley further comprises spaces (24) that run through the pulley in an axial direction thereof, the spaces being defined between adjacent spokes.

## Patentansprüche

1. Riemenscheibenanordnung, umfassend:
ein Lager (1) mit einem Außenring (11), einem Innenring (12) und Wälzelementen (13);
eine Leichtmetall-Riemenscheibe (2), die um den Außenring des Lagers platziert ist, wobei die Riemenscheibe umfasst:
einen ringförmigen Leichtmetall-Ansatz (21);
einen ringförmigen Leichtmetall-Rand (22), der konzentrisch mit dem ringförmigen Ansatz platziert ist; und
eine Vielzahl von flachen Leichtmetall-Speichen (23), die sich radial von dem Ansatz zu dem Rand hin erstrecken und den Ansatz und den Rand miteinander verbinden; und wobei die Riemenscheibenanordnung ferner umfasst:
ein ringförmiges Fügeelement (3), das zwischen einer inneren Umfangsoberfläche der Riemenscheibe und einer äußeren Umfangsoberfläche des Außenrings zum Fügen der Riemenscheibe an das Lager vorgesehen ist, wobei das ringförmige Fügeelement aus einem Hochpolymer-Material hergestellt ist, wobei
die Riemenscheibe, der Außenring des Lagers und das Fügeelement unterschiedliche Wärmeausdehnungskoeffizienten aufweisen, wobei
der Wärmeausdehnungskoeffizient der Riemenscheibe größer ist als der Wärmeausdehnungskoeffizient des Außenrings, und der Wärmeausdehnungskoeffizient des Fügeelements größer ist als der Wärmeausdehnungskoeffizient der Riemenscheibe; **dadurch gekennzeichnet, dass:**
die Speichen der Riemenscheibe jeweils Seitenflächen (25) aufweisen, die jeweils aus einer Oberfläche bestehen, die sich parallel zu einer Achse der Riemenscheibe erstreckt, wobei
jede der Speichen (23) ferner eine vordere Fläche (27) und eine hintere Fläche (28) aufweist, die axial gegenüberliegende Endflächen sind, und
die vorderen Flächen (27) der Speichen auf einer identischen imaginären Umlaufoberfläche positioniert sind, die auf der Achse der Riemenscheibe zentriert ist, und die hinteren Flächen (28) der Speichen auch auf einer identischen Umlaufoberfläche, die auf der Achse der Riemenscheibe zentriert ist, positioniert sind.

2. Riemenscheibenanordnung nach Anspruch 1, wobei
die Riemenscheibe (2) aus zumindest einem Material hergestellt ist, das aus einer Gruppe ausgewählt ist, die aus Aluminium, Aluminiumlegierung, Magnesium und Magnesiumlegierung besteht.

3. Riemenscheibenanordnung nach Anspruch 1 oder 2, wobei
das Fügeelement (3) zwischen dem Lager und der Riemenscheibe pressgepasst ist.

4. Riemenscheibenanordnung nach Anspruch 1, wobei
die Riemenscheibe ferner Räume (24) umfasst, die durch die Riemenscheibe in einer axialen Richtung davon verlaufen, wobei die Räume zwischen angrenzenden Speichen definiert sind.

## Revendications

1. Ensemble de poulie, comportant :
un roulement (1) ayant une bague extérieure (11), une bague intérieure (12), et des éléments de roulement (13) ;
une poulie en métal léger (2) placée autour de la bague extérieure du roulement, la poulie comportant :
un bossage annulaire en métal léger (21) ;
une jante annulaire en métal léger (22) placée de manière concentrique au bossage annulaire ; et
une multiplicité de rayons en forme de plaque en métal léger (23) qui s'étendent radialement depuis le bossage vers la jante et relient le bossage et la jante l'un à l'autre ; et l'ensemble de poulie comportant en outre :
un élément de jonction annulaire (3) prévu entre une surface circonférentielle intérieure de la poulie et une surface circonférentielle extérieure de la bague extérieure afin de relier la poulie au roulement, ledit élément de jonction annulaire étant fabriqué dans une matière polymère à poids moléculaire élevé,
la poulie, la bague extérieure du roulement, et l'élément de jonction ayant des coefficients de dilatation thermique différents,
le coefficient de dilatation thermique de la poulie étant plus grand que le coefficient de dilatation thermique de la bague extérieure, et le coefficient de dilatation thermique de l'élément de jonction étant plus grand que le coefficient de dilatation thermique de la poulie ; **caractérisé en ce que :**
lesdits rayons de la poulie ont chacun des faces latérales (25) qui se compose chacune d'une surface s'étendant parallèlement à un axe de la poulie,
chacun desdits rayons (23) ayant en outre une face avant (27) et une face arrière (28) qui sont des faces d'extrémité axialement opposées, et
les faces avant (27) des rayons étant positionnées sur une surface de révolution imaginaire identique centrée sur l'axe de la poulie, et les faces arrière (28) des rayons étant également positionnées sur une surface de révolution imaginaire identique centrée sur l'axe de la poulie.

2. Ensemble de poulie selon la revendication 1, dans lequel la poulie (2) se compose d'au moins une matière choisie dans un groupe se composant de l'aluminium, de l'alliage d'aluminium, du magnésium et de l'alliage de magnésium.

3. Ensemble de poulie selon la revendication 1 ou 2, dans lequel l'élément de jonction (3) est monté à la presse entre le roulement et la poulie.

4. Ensemble de poulie selon la revendication 1, dans lequel la poulie comporte en outre des espaces (24) qui s'étendent à travers la poulie dans une direction axiale de celle-ci, les espaces étant définis entre les rayons adjacents.
